# EUROPÄISCHE PATENTSCHRIFT

(11) **EP 1 123 578 B1**
(45) Veröffentlichungstag und Bekanntmachung des Hinweises auf die Patenterteilung: **28.08.2002**
(21) Anmeldenummer: 99957932.9
(22) Anmeldetag: 21.10.1999
(51) Int. Cl.: H02N 3/00

(54) **VERFAHREN ZUR ERZEUGUNG ELEKTRISCHER ENERGIE**
METHOD FOR PRODUCING ELECTRICAL ENERGY
PROCEDE DE PRODUCTION D'ENERGIE ELECTRIQUE

(30) Priorität: 22.10.1998 DE 19848852
(43) Veröffentlichungstag der Anmeldung: 16.08.2001
(73) Patentinhaber: Luchinskiy, Alexander, 55543 Bad Kreuznach (DE); Werth, Günther, 55127 Mainz (DE); Shifrin, Yakov, Charkow 310145 (UA)
(72) Erfinder: Luchinskiy, Alexander, 55543 Bad Kreuznach (DE); Werth, Günther, 55127 Mainz (DE); Shifrin, Yakov, Charkow 310145 (UA)
(86) Internationale Anmeldenummer: DE9903389
(87) Internationale Veröffentlichungsnummer: WO00025414

(56) Entgegenhaltungen:
- US-A- 3 518 461
- US-A- 4 206 396
- US-A- 4 433 248

## Beschreibung

Es ist ein Verfahren bekannt zur Erzeugung hoher Gleichspannungen durch mechanische Verschiebung elektrischer Ladungen. Dabei werden durch Triboelektrisierung oder durch induzierte Elektrisierung die Ladungen zwischen zwei Arbeitskörpern getrennt, wobei einer von ihnen mit einer Elektrode elektrisch verbunden ist.

Danach wird der zweite Arbeitskörper an eine andere Elektrode übertragen, an der eine Ladungsabnahme erfolgt. Das beschriebene Verfahren wird in Vorrichtungen realisiert, die als elektrostatische Generatoren bezeichnet werden (DE 23 36 487 A 1, European Patent Application 0229 843 A 1).

Es ist ein Verfahren bekannt zur Umwandlung der kinetischen Energie der Strömung eines Gases in elektrische Energie durch die Verschiebung der zerstäuberten elektrisch geladenen Flüssigkeitspartikeln anhand von Energie der Strömung dieses Träger-Gases (US 3 518 461 A).

Das gezeigte Verfahren enthält aber keine technische Lösung für die Frage, wie man diese Strömung des Träger-Gases formiert, wo man die Energie für diese Strömung her nimmt, und auf welche Weise die Sonnenenergie bzw. die Wärmeenergie in die Energie dieser Strömung umgewandelt werden könnte.

Es ist ein Verfahren bekannt zur Erzeugung elektrischer Energie durch Reibung einiger steifer dielektrischer Oberflächen aneinander, die aus verschiedenen Materialien bestehen, und das in einer Kompaktvorrichtung realisiert wird (European Patent Application 0366591 A1).

Die aufgeführten Vorrichtungen, die die bekannten Verfahren realisieren, werden durch die Möglichkeit der Erzeugung elektrischer Hochspannung (bis 15-20 MV), durch niedrigen Strom (bis 10 mA), also auch durch eine niedrige Leistung charakterisiert. Die Leistung dieser Vorrichtungen wird durch die maximal zulässige Oberflächendichte der Ladungen auf einem Förderer dem Träger der Ladung, einerseits und durch die Geschwindigkeit der mechanischen Bewegung dieses Ladungsförderers andererseits begrenzt.

Die Ladungsdichte ist ihrerseits durch die Entstehung der elektrischen Entladung an der Oberfläche begrenzt. Die Geschwindigkeit des Ladungsförderers ist durch die mechanischen Bewegungsmöglichkeiten der Systemteile begrenzt.

Den Wirkungsgrad des Systems bestimmen hauptsächlich die aerodynamischen Verluste bei der mechanischen Bewegung des Ladungsförderers und die Reibung der mechanischen Systemteile untereinander. In den existierenden Vorrichtungen beträgt diese nicht mehr als 15-20 %.

Der in den Patentansprüchen 1-6 angegebenen Erfindung liegt das Problem zugrunde, die Leistung und den Wirkungsgrad der das beschriebene Verfahren verwirklichenden Vorrichtungen zu erhöhen und die Umwandlung der Wärmeenergie in elektrische Energie zu ermöglichen.

Dieses Problem wird durch die in den Patentansprüchen 1-5 aufgeführte Merkmale gelöst.

Die mit der Erfindung erzielten Vorteile bestehen insbesondere darin, daß das angegebene Verfahren die Wärmeenergie irgendeines Erhitzers für ihre direkte Wandlung in elektrische Energie zu nutzen ermöglicht, wobei eine hohe Ausgangsleistung und ein hoher Wirkungsgrad erreicht wird.

Infolge der Eigenschaften der Wärmeröhren, reicht eine relativ kleine Temperaturdifferenz zwischen dem Erhitzer und dem Kühler, um eine hohe Stromgeschwindigkeit des gasförmigen Arbeitskörpers der Wärmeröhre, und folglich auch eine hohe kinetische Energie zu erreichen. Durch diese kinetische Energie bewirkt der genannte Strom die Triboelektrisierung der Arbeitskörper des elektrostatischen Generators und die mechanische Trennung der Ladungen.

In den dieses Verfahren realisierenden Vorrichtungen fehlen somit mechanisch bewegte Teile, dadurch werden alle deswegen entstehenden Leistungs- und Wirkungsgradverluste vermieden. Außerdem erfolgt in diesem Fall der Antrieb nicht durch äußere mechanische Arbeit, sondern durch Wärmeenergie, welche sogar aus einer kleinen Temperaturdifferenz abgenommen werden kann.

Die Ausführungsbeispiele des Verfahrens sind in den Zeichnungen dargestellt und werden im folgenden näher beschrieben.

Es zeigen:
Fig. 1
   Ausführungsbeispiel des Verfahrens in einer stationären Vorrichtung mit seiner angegebenen Orientierung im Gewichtskraftfeld.
Fig. 2
   Ausführungsbeispiel des Verfahrens in einer Vorrichtung, die bei verschiedenen Orientierungen, im Gewichtskraftfeld, als auch in der Schwerelosigkeit funktionieren kann.
Fig. 3
   Ausführungsbeispiel des Verfahrens, bei dem die Elektrisierung der Arbeitsflüssigkeit des elektrostatischen Generators nicht am Ort ihrer Loslösung von der Mündung der Speiserdüse erfolgt, sondern in einiger Entfernung von dieser durch das Zerschlagen der Tropfen beim plötzlichen Auftreffen auf das Netz.

Alle Arten der Geräte, die den Prozeß ermöglichen, beinhalten die Wärmeröhre (WR) 1 und der Generator 2. Die Wärmeröhre 1 besitzt den Arbeitskörper in flüssiger Phase (die Arbeitsflüssigkeit der WR) 3, so wie in der Gasphase (das Arbeitsgas der WR) 4, und ein Kapillareinsatz der Wärmeröhre 5. Der Generator 2 enthält den harten Arbeitskörper des Generators 6, den flüssigen Arbeitskörper des Generators 7, das Netz für die Ladungsabnahme 8, die äußeren Elektroden 9a und 9b und die Kontur 10 für die Rückführung des flüssigen Arbeitskörpers.

Beim Aufbau eines äußeren Temperaturgradienten zwischen dem Verdampfer 11 und dem Kondensator der Wärmeröhre 12 verdampft die Arbeitsflüssigkeit der WR im Verdampfer auf seiner Kapillarstruktur. Gleichzeitig verdichtet sich das Arbeitsgas WR auf der Kapillarstruktur des Kondensators der WR. Die Flüssigkeit 3 gelangt über den Kapillareinsatz 5 aus dem Kondensator zurück in den Verdampfer.

Es genügt für den Fortgang des Prozesses, daß dem Arbeitskörper der WR die verborgene Wärme der Dampfbildung im ersten Fall zugeführt und im zweiten Fall abgeführt wird. Deshalb kann dieses Prozeß auch bei sehr kleiner Temperaturdifferenz durchgeführt werden.

Dabei vergrößert sich sprungartig das Volumen des Arbeitskörpers der WR im Verdampfer und infolgedessen auch der Druck des Arbeitsgases 4 im Verdampfer. Genauso sprunghaft verkleinert sich das Volumen des Arbeitskörpers und der Druck des Arbeitsgases der WR im Kondensator.

Damit finden bei einer kleinen Temperaturdifferenz in einem geschlossenen Raum gleichzeitig und ununterbrochen zwei, den Eigenschaften nach explosionsartige, mit verschiedenen Vorzeichen ablaufende und im Raum verteilte Prozesse der Erhöhung und Erniedrigung des Gasdrucks statt. Dies führt zur Entstehung eines Hochgeschwindigkeitsgasstroms aus dem Verdampfer in den Kondensator.

Dabei wandelt sich die Wärmeenergie, die der Wärmeröhre zugeführt wird, in die kinetische Energie der Moleküle des Gasstroms um und kann im weiteren in andere Arten von Energie umgewandelt werden, z. B. in elektrische Energie.

Der harte Arbeitskörper 6 und der flüssige Arbeitskörper 7 des Generators 2 werden im Inneren der Wärmeröhre untergebracht, etwa am Ort des maximalen Stroms des Arbeitsgases der WR 4, unmittelbar hinter dem Diaphragma 13. Das Diaphragma 13 konzentriert den Gasstrom aus dem Verdampfer in den Kondensator. Dabei ist der harte Arbeitskörper 6 bzgl. der WR unbeweglich befestigt.

Der flüssige Arbeitskörper 7 wird in das Innere der WR über den Speiser 14 zugeführt, wobei die Ladungstrennung und die Ladungsverschiebung mit Hilfe der gerichteten Gasströmung der Wärmeröhre erfolgt, welche die Flüssigkeitspartikel mitführt und ihn zur Ladungstrennung und Verschiebung an dem anderen Arbeitskörper vorbeiführt.

Im weiteren erfolgt die Ladungsabnahme auf die äußere Elektrode 9a, im ganzen analog zu dem, wie dies in den elektrostatischen Generatoren mit harten Körpern erfolgt.

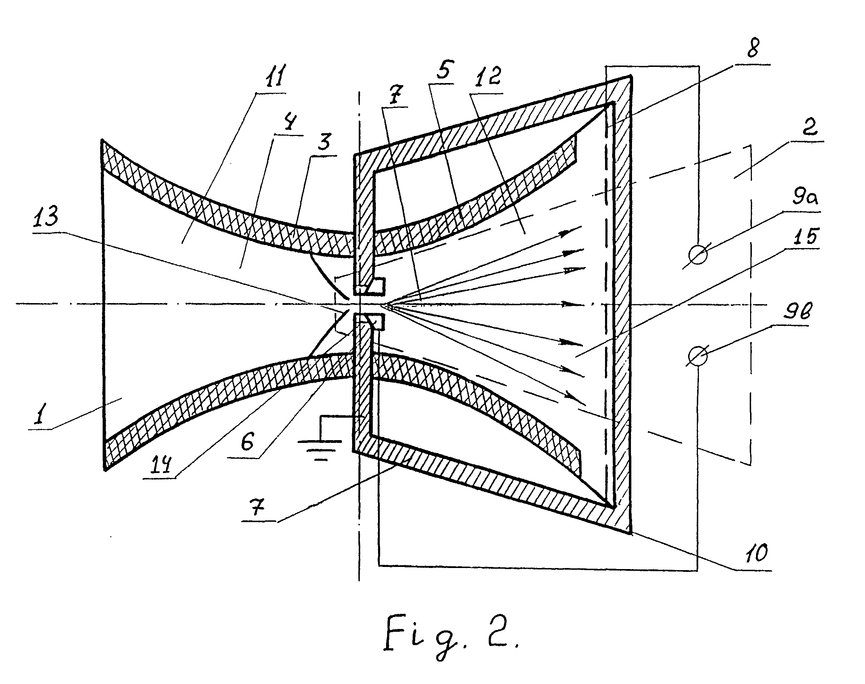

Bei der Variante der Verfahrensdurchführung (Fig. 2) ist die Kontur 10 für die Rückführung des flüssigen Arbeitskörpers 7 des Generators mit der Kapillarstruktur aufgefüllt. Dies gibt die Möglichkeit, die Arbeit des Gerätes unabhängig von dessen Lage im Feld der Gewichtskräfte, und auch in der Schwerelosigkeit, durchzuführen. Dabei ist die offene Oberfläche der erwähnten Kapillarstruktur unmittelbar hinter dem Netz der Abnahmeelektrode 8 untergebracht.

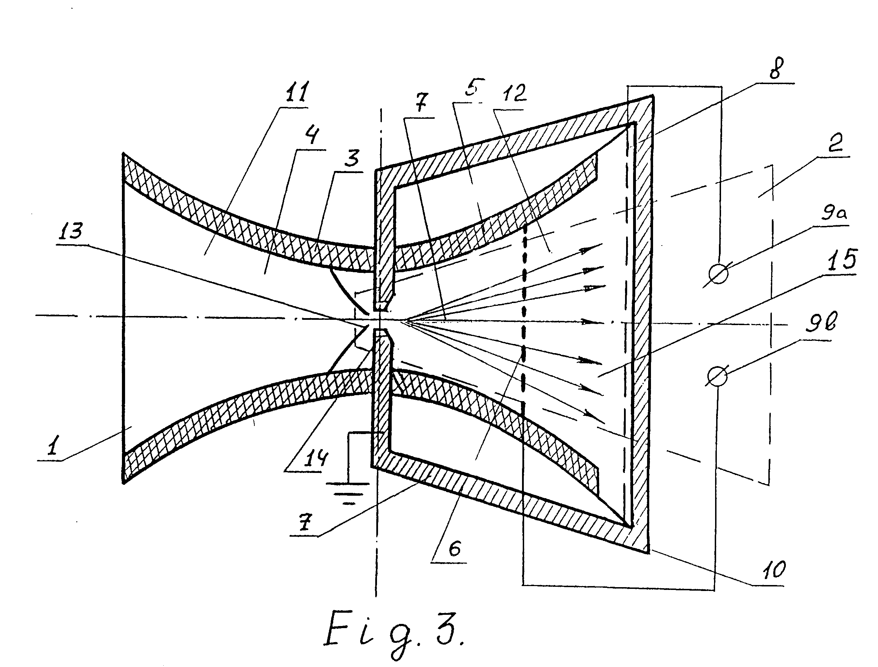

Bei den Ausführungsbeispielen anderer Varianten des Verfahrens (Fig. 3) erfolgt die Ladungstrennung durch das Auftreffen der Flüssigkeit 7 auf den Körper 6. Dabei hat der Körper 6 die Form von z. B. einem Netz. In diesem Fall wird der harte Arbeitskörper in einiger Entfernung *l* von dem Einführungsort des Speisers 14 ins Innere der Wärmeröhre gebracht. Die Tropfen des Körpers 7 gewinnen noch vor dem Aufprall auf dem Körper 6 eine gewisse kinetische Energie, die für die Ladungstrennung geleistet wird. Nach dem Aufprall werden die geladenen Tropfen weiter mit dem Gasstrom der WR 4 zur Elektrode 8 fortgetragen.

Die nicht kondensierenden Gase, die in der Wärmeröhre verweilen (z. B. Luft, und auch Dämpfe der Arbeitsflüssigkeit des Generators, die unvermeidlich in einem geschlossenen Raum mit der Flüssigkeit, die eine freie Oberfläche hat, vorhanden sind), werden in den ersten Sekunden der Arbeit von der WR durch das Arbeitsgas der WR zu einem der Röhrenenden abgedrängt, und bilden ein Gaskissen 15.

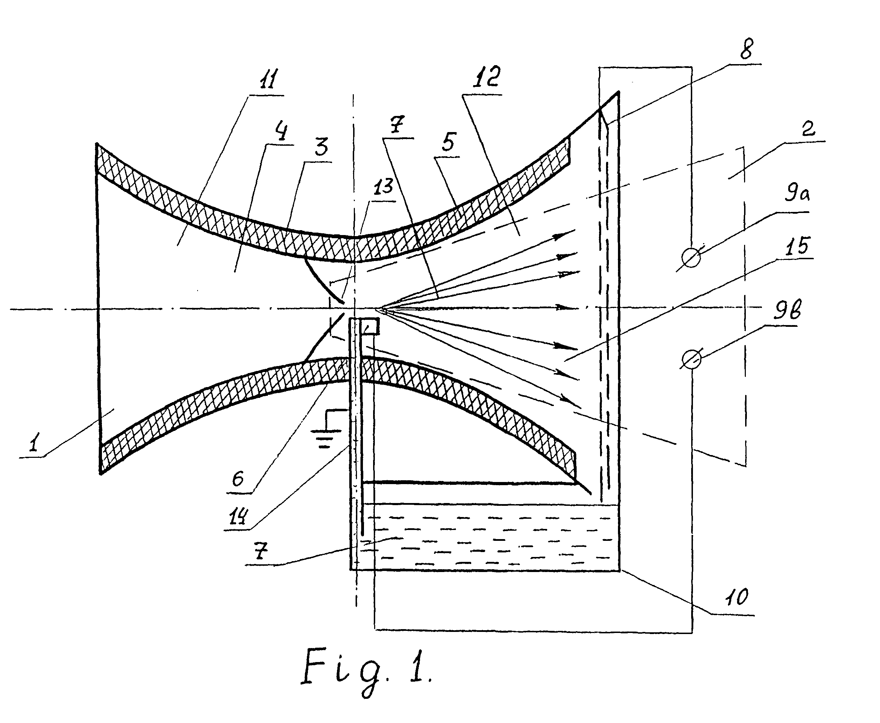

Bei der Geometrie der WR und der Elektrode für die Ladungsabnahme 8 (Abb. 1-3), isoliert dieses Gaskissen gewissermaßen thermisch die Abnahmeelektrode 8 und die ihr anliegende Wand der Wärmeröhre. Deshalb unterscheidet sich die Temperatur der Elektrode in allgemeinem Fall von der Temperatur der Kapillarstruktur des Kondensators der Wärmeröhre.

Da der Einführungsort des Speisers 14 in die WR sich außerhalb des Verdampfers befindet, kann als die Arbeitsflüssigkeit der WR und des Generators eine und die selbe Flüssigkeit verwendet werden.

## Patentansprüche

1. Verfahren zur Erzeugung elektrischer Energie, bei dem Ladungen zwischen zwei Arbeitskörpern triboelektrisch oder elektrostatisch getrennt, die Ladungen durch Verschiebung von Arbeitskörpern unter Einwirkung äußerer Kräfte voneinander entfernt werden, wobei die äußeren Kräfte gegen die Coulomb Kraft Arbeit leisten, und die Ladungen auf Elektroden geführt werden,
**dadurch gekennzeichnet**
duß die genannten Verfahrensschritte innerhalb des Innenvolumens einer Wärmöhre **(1)** durchgerührt werden, wobei die Ladungstrennung und die Ladungsverschiebung mit Hilfe der gerichteten Gasströmung der Wärmeröhre erfolgt, welche den einen Arbeitskörper **(7)** mitführt und ihn zur Ladungstrennung und Verschiebung an dem anderen Arbeitskörper **(6)** vorbeiführt.

2. Verfahren nach Anspruch 1, **dadurch gekennzeichnet, daß** der eine Arbeitskörper in der Gasströmung mitgeführte Flüssigkeitspartikel umfasst.

3. Verfahren nach Anspruch 1 oder 2, **dadurch gekennzeichnet, daß** der eine Arbeitskörper **(7)** ein von der Gasströmung durchströmtes Netz umfasst.

4. Verfahren nach einem der Ansprüche 1 bis 3, **dadurch gekennzeichnet, daß** der andere Arbeitskörper **(6)** innerhalb der Wärmeröhre (1) etwa an der Position maximaler Strömungsgeschwindigkeit angeordnet ist.

5. Verfahren nach einem der Ansprüche 2 bis 4, **dadurch gekennzeichnet, daß** die Flüssigkeit zur Bildung der Flüssigkeitspartikel rückgewonnen wird.

6. Verfahren nach einem der Ansprüche 1 bis 5, **dadurch gekennzeichnet, daß** als die Arbeitsflüssigkeit **(3)** der Wärmeröhre **(1)** und des Generators **(2)** ein und dieselbe Flüssigkeit verwendet wird.

## Claims

1. Process for producing electrical energy, in which the charges between two working media are separated triboelectrically or electrostatically, the charges are moved away from one another by displacement of the working media under the action of external forces, the external forces performing work against the Coulomb force, and the charges being guided onto electrodes,
**wherein**
the indicated process steps are carried out within the inside volume of a heat pipe **(1),** charge separation and charge displacement taking place using the directed gas flow of the heat pipe, which flow entrains one working medium **(7)** and routes it past the other working medium **(6)** for charge separation and displacement.

2. Process as claimed in claim 1, **wherein** one working medium encompasses liquid particles which are entrained in the gas flow.

3. Process as claimed in claim 1 or 2, **wherein** one of the working mediums comprises a grid through which the gas flow passes.

4. Process as claimed in one of claims 1 to 3, **wherein** the other working medium (6) is located within the heat pipe **(1)** roughly at the position of maximum flow velocity.

5. Process as claimed in one of claims 2 to 4, **where** the liquid is recovered to form the liquid particles.

6. Process as claimed in one of claims 1 to 5, **wherein** the same liquid is used for the working liquid **(3)** of the heat pipe **(1)** and of the generator **(2).**

## Revendications

1. Procédé de production d'énergie électrique par séparation des charges sur deux corps actifs par la méthode triboelélectrique ou électrostatique. Ces charges sont séparées l'une de l'autre par le déplacement des deux corps actifs par l'impression de forces extérieures, qui par l'action contre la force Coulombienne fournissent un travail. Il en résulte le transport des charges sur les électrodes.
Ce procédé est **caractérisé par le fait que** les actions successives ont lieu dans un volume interne d'un tube de chaleur (HEAT PIPE) (1), ces actions de séparation de charges et le transport de charges étant accomplis par flux forcé d'un gaz, qui entraîne un des corps actives (7) et le font passer sur l'autre corps actif (6) pour établir la séparation et le transport des charges.

2. Procédé suivant le droit 1, étant **caractérisé par** le corps actif entraîné par le flux de gaz, est constitué par des particules liquides.

3. Procédé suivant le droit 1 ou 2, étant **caractérisé par** un corps actif (7), qui est réalisé par un grille traversée par le flux gazeux.

4. Procédé suivant les droits 1 à 3, étant **caractérisé par** l'autre corps actif (6) placé à l'endroit du maximum de vitesse de gaz à l'intérieur du tube de chaleur (HEAT PIPE) (1).

5. Procédé suivant les droits 2 à 4, étant **caractérisé par** le recyclage du liquide, à partir duquel les particules liquides sont formée.

6. Procédé suivant les droits 1 à 5, étant **caractérisé par** le même liquide, qui sert à la fois de liquide actif (3) dans le tube de chaleur (HEAT PIPE) (1) et dans le générateur (2).
